# EUROPEAN PATENT APPLICATION

(11) **EP 4 749 721 A1**
(43) Date of publication of application: **27.05.2026**
(21) Application number: 24843174.4
(22) Date of filing: 18.07.2024
(51) Int. Cl.: H01M 4/62, H01M 4/13, H01M 10/052, H01M 10/0562, H01M 10/0565

(54) **SECONDARY CELL**

(30) Priority: 20.07.2023 JP 2023117958
(71) Applicant: Sanoh Industrial Co., Ltd., Shibuya-ku Tokyo 150-0002 (JP)
(72) Inventor: MAEDA, Yu, Koga-shi, Ibaraki 306-0041 (JP); SAKAGUCHI, Yoshiki, Koga-shi, Ibaraki 306-0041 (JP)
(74) Representative: Cabinet Netter
(86) International application number: PCT/JP2024/025769
(87) International publication number: WO 2025/018386

(57) **Abstract**

Sold-state batteries having a solid electrolyte between a negative electrode and a positive electrode have a problem that charge/discharge reactions do not readily occur at room temperature. Therefore, an object is to realize a secondary battery having a solid electrolyte that can be charged and discharged at room temperature. As a means for this, a secondary battery including a solid electrolyte and an electrode which is in contact with the solid electrolyte and used as a positive electrode is used. Here, the positive electrode contains an electrolyte and an additive, and the additive contains a halide having a metal counter cation.

## Description

### TECHNICAL FIELD

The present invention relates to a secondary battery provided with a solid electrolyte.

### BACKGROUND ART

In recent years, the use of lithium-ion secondary batteries as rechargeable secondary batteries has been expanding. Among them, solid-state batteries (semi-solid-state batteries) that use a solid electrolyte as an electrolyte exhibit a high level of safety because of the small amount of flammable electrolytic solution used. In addition, solid-state batteries have the potential to theoretically achieve a high energy density, and thus development is being conducted by many companies and others.

Patent Document 1 (Japanese Unexamined Patent Application Publication No. 2004-47416) and Patent Document 2 (Japanese Unexamined Patent Application Publication No. 2016-131081) each disclose a secondary battery in which positive and negative electrodes are immersed in a liquid non-aqueous electrolyte. In Patent Document 1, a lithium compound (for example, LiCl) is contained in at least one of the positive electrode, the non-aqueous electrolyte, and the negative electrode. In Patent Document 2, LiCl is contained in the positive electrode as a lithium salt.

Patent Document 3 (International Patent Publication No. WO 2019/146236) discloses a solid-state battery in which lithium is contained in the solid electrolyte.

### RELATED ART DOCUMENTS

### PATENT DOCUMENTS

Patent Document 1: Japanese Unexamined Patent Application Publication No. 2004-47416
Patent Document 2: Japanese Unexamined Patent Application Publication No. 2016-131081
Patent Document 3: International Patent Publication No. WO 2019/146236

### SUMMARY OF THE INVENTION

### PROBLEMS TO BE SOLVED BY THE INVENTION

Solid-state batteries have the problem that charge/discharge reactions occur under high temperature conditions, but charge/discharge reactions do not readily occur at room temperature. An object of the present invention is to realize a secondary battery that can be charged and discharged at room temperature.

Other objects and novel features will become apparent from the description of this specification and the accompanying drawings.

### MEANS FOR SOLVING THE PROBLEMS

Among the embodiments disclosed in this application, an outline of a representative embodiment will be briefly described as follows.

A secondary battery according to one embodiment includes a solid electrolyte and an electrode which is in contact with the solid electrolyte and used as a positive electrode. The electrode contains an electrolyte and an additive, and the additive contains a halide having a metal counter cation.

### EFFECTS OF THE INVENTION

It is possible to realize a secondary battery that can be charged and discharged at room temperature.

### BRIEF DESCRIPTIONS OF THE DRAWINGS

[FIG. 1] is a cross-sectional view illustrating a secondary battery according to an embodiment.
[FIG. 2] is a table illustrating compounding ratios of materials constituting an electrode (positive electrode) of a secondary battery of a comparative example.
[FIG. 3] is a table illustrating compounding ratios of materials constituting an electrode (positive electrode) of the secondary battery according to the embodiment.
[FIG. 4] is a graph illustrating a relationship between capacity and voltage when the secondary battery of the comparative example is charged and discharged at room temperature.
[FIG. 5] is a graph illustrating a relationship between capacity and voltage when the secondary battery according to the embodiment is charged and discharged at room temperature.
[FIG. 6] is a schematic diagram illustrating an active material concentration gradient and the like after the secondary battery of the comparative example is charged and discharged at room temperature.
[FIG. 7] is a schematic diagram illustrating an active material concentration gradient of the secondary battery according to the embodiment.
[FIG. 8] is a schematic diagram illustrating an active material concentration gradient and the like after the secondary battery according to the embodiment is charged and discharged at room temperature.

### DETAILED DESCRIPTION OF PREFERRED EMBODIMENTS

Hereinafter, an embodiment of the present invention will be described in detail with reference to the drawings. Note that the members having the same function are denoted by the same reference numerals in all the drawings for describing the embodiment, and the repetitive descriptions thereof will be omitted. In the embodiment below, descriptions of the same or similar components are not repeated as a general rule unless particularly necessary. In the drawings illustrating the embodiment, hatching may be applied even in plan views or perspective views for making the structure easily understood. Further, in the drawings illustrating the embodiment, hatching may be omitted even in cross-sectional views for making the structure easily understood.

### (Embodiment)

As secondary batteries capable of achieving a higher energy density than lithium (Li)-ion secondary batteries based on intercalation reaction, there are lithium-ion secondary batteries based on conversion reaction. In the lithium-ion secondary batteries based on conversion reaction, the host material not only provides sites for accommodating the active material, but also itself participates in the redox reaction.

The lithium-ion secondary batteries based on conversion reaction include all-solid-state batteries that do not use liquid electrolyte (electrolytic solution) and solid-state batteries that use electrolytic solution in part and separate the electrolytic solution from the positive electrode (hereinafter referred to as semi-solid-state batteries in some cases).

Solid-state batteries have the problem that charging and discharging are difficult at room temperature. The inventors of this application considered that the cause lies in the fact that the transfer of chloride ions necessary for the reaction becomes less likely to occur due to the solidification of the electrolyte. In the following, adding lithium chloride to the positive electrode of the secondary battery as an additive in order to solve the problem will be described.

### <Structure of Secondary Battery>

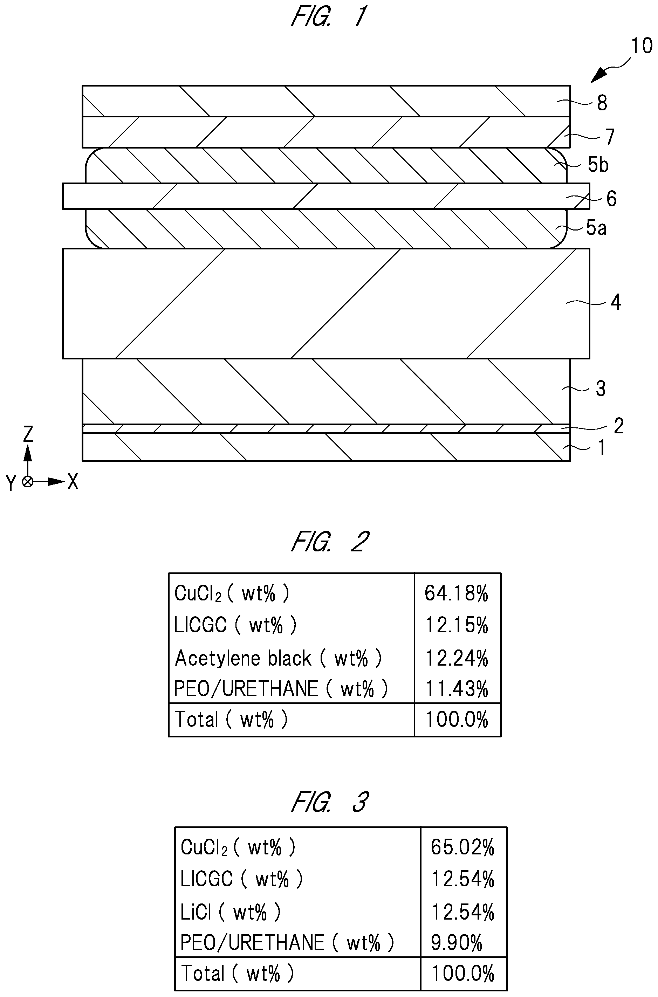

FIG. 1 illustrates a cross-sectional view of a secondary battery according to this embodiment. As illustrated in FIG. 1, a secondary battery 10, which is a solid-state battery (semi-solid-state battery), has a structure in which sheet-like members extending in an X-Y plane along an X direction and a Y direction and a part of liquid (electrolytic solution) are stacked. The secondary battery 10 is made up of a current collector 1, a primer coat layer 2, a positive electrode 3, a solid electrolyte 4, an electrolytic solution 5a, a separator 6, an electrolytic solution 5b, a negative electrode 7, and a current collector 8, which are stacked in this order from the bottom in FIG. 1.

The current collectors (current collector foils) 1 and 8 are made of, for example, stainless steel. Each of the current collectors 1 and 8 has a protrusion (not illustrated) extending in the horizontal direction (X direction or Y direction), and these protrusions are used as terminals that connect the secondary battery 10 to the outside. The primer coat layer 2 is, for example, a coating layer containing carbon. The primer coat layer 2 may be, for example, an Au (gold) plating layer. The positive electrode 3 is a conversion electrode which is one of the two electrodes that the secondary battery 10 has. The conversion electrode is an electrode in which a reversible decomposition and reformation reaction (conversion reaction) occurs as an electrode reaction. The specific configuration of the positive electrode 3 will be described later. The solid electrolyte 4 is a material that can easily move ions by applying an electric field from the outside while remaining in a solid state. The solid electrolyte 4 is, for example, LICGC (registered trademark) containing lithium oxide.

The separator 6 is impregnated with the electrolytic solutions 5a and 5b. The separator 6 has a role of separating the negative electrode 7 from the solid electrolyte. Although the solid electrolyte 4 and the negative electrode 7 are separated from the separator 6 in FIG. 1, the solid electrolyte 4 and the negative electrode 7 may be in close contact with the separator 6 in reality. A polymer material (for example, polyethylene) having high lithium ion conductivity is used as the separator 6. Since LICGC (registered trademark) is reduced to lithium metal constituting the negative electrode 7, the direct contact between the solid electrolyte 4 and the negative electrode 7 is prevented using the separator 6 together with the electrolytic solutions 5a and 5b. Although the electrolytic solutions 5a and 5b are illustrated separately in FIG. 1, the electrolytic solutions 5a and 5b are impregnated into the separator 6 and are not separated from each other. The electrolytic solutions 5a and 5b have a role of smoothly moving lithium ions between the negative electrode 7 and the solid electrolyte 4. The electrolytic solutions 5a and 5b are mainly made up of lithium salts, organic solvents, and additives. The negative electrode 7 is one of the two electrodes that the secondary battery 10 has. The negative electrode 7 is, for example, a metal layer containing lithium.

The stacked structure illustrated in FIG. 1 is sealed around its periphery by a laminate film (not illustrated). However, the above-mentioned protrusions which are parts of the current collectors 1 and 8 are exposed to the outside of the laminate film and are used as terminals. The stacked structure and the laminate film that seals it form a cell of the solid-state battery. Inside the laminate film, the electrolytic solutions 5a and 5b are only impregnated into the separator 6 and the amount thereof is small, so that the electrolytic solutions 5a and 5b do not come into contact with the positive electrode 3. In other words, the secondary battery 10 of this embodiment is a semi-solid-state battery including the electrolytic solutions 5a and 5b and the solid electrolyte 4, in which the electrolytic solutions 5a and 5b are separated (spaced apart) from the positive electrode 3.

The positive electrode 3, which is an electrode of the secondary battery of this embodiment, contains an active material, an additive, an electrolyte, and a binder. However, the binder is not an essential element. Also, the positive electrode 3 may further contain a conductive additive. The secondary battery 10 is a solid-state battery including a solid electrolyte. A lithium-ion secondary battery including the solid-state battery is a chemical battery that extracts a chemical reaction as capacity. A material involved in this chemical reaction is referred to as an active material. The conductive additive has a role of ensuring the flow of electricity in the secondary battery 10, but is not directly involved in the chemical reaction. The additive is directly involved in the chemical reaction, and thereby has a role of causing the electrode reaction to occur from the current collector (substrate) side.

The electrolyte is a material that allows the chemical reaction to occur smoothly throughout the positive electrode 3. In other words, it is considered that the chemical reaction in the positive electrode 3 of a solid-state battery occurs sequentially from the surface that is in contact with the solid electrolyte 4, whereas the chemical reaction is unlikely to occur in the locations other than the surface in the positive electrode 3. Therefore, by mixing an electrolyte into the positive electrode 3, the number of contact points between the positive electrode 3 and the electrolyte can be increased, making the chemical reaction occur more readily throughout the positive electrode 3. The binder is provided for achieving a uniform film thickness of the positive electrode 3. In other words, the positive electrode 3 is formed by solidifying a semi-liquid slurry through a drying process. The binder gives the slurry viscoelasticity and has a role of preventing the slurry from flowing when the slurry is applied onto the current collector 1.

Next, examples of the materials constituting the positive electrode 3 will be described. The active material is made of copper chloride (CuCl₂). The electrolyte is a material containing lithium oxide and is made of, for example, LICGC (registered trademark). The additive is made of lithium chloride (LiCl). The binder is made of a mixture of polyethylene oxide (PEO) and urethane. One of the main features of this embodiment is that lithium chloride is used as a material of the additive. In addition to LiCl, halides having a metal counter cation such as NaCl (sodium chloride) or KCl (potassium chloride) can be used as the material of the additive. A cation is an ion with a positive (+) electric charge, and an anion is an ion with a negative (-) electric charge. In an ionized substance, the ion of the opposite charge (for example, Li⁺ ion) as viewed from a negative ion (for example, Cl⁻ ion) is referred to as a counter cation.

### <Procedure for Manufacturing Secondary Battery>

Next, the procedure for manufacturing a cell of a secondary battery (solid-state battery) will be described. Here, the secondary battery in the course of the manufacturing process may be referred to as a stacked body. First, a slurry in which materials for forming a positive electrode are mixed is prepared. The slurry is a mixture of the active material (for example, copper chloride), the conductive additive (for example, material containing lithium oxide), the additive (lithium chloride), and the binder (PEO/urethane) described above. These materials are liquid, and the slurry containing the binder is semi-liquid.

Next, the above slurry is applied onto the current collector 1 mainly made of stainless steel and having an upper surface covered with the primer coat layer 2. Next, the plate-shaped solid electrolyte 4 is attached onto the slurry. Next, the stacked body in which the solid electrolyte 4 is disposed on the current collector 1 via the slurry is placed in a vacuumed drying apparatus, and is vacuum-dried by heating with a heater. As a result, the slurry is solidified and the positive electrode 3 is formed. Next, the separator 6 into which the electrolytic solutions 5a and 5b have been injected, the negative electrode 7, and the current collector 8 are stacked in this order on the upper surface of the stacked body removed from the drying apparatus, that is, on the upper surface of the solid electrolyte 4. The secondary battery 10 made of the stacked body thus formed is sealed with a laminate film. Consequently, the secondary battery (solid-state battery, semi-solid-state battery) of this embodiment is almost completed.

### <Effects of This Embodiment>

In a semi-solid-state battery (secondary battery) of a comparative example, for example, acetylene black (carbon black) made of carbon can be used as a conductive additive constituting a positive electrode without using lithium chloride as the additive constituting the positive electrode. In the case of such a semi-solid-state battery or all-solid-state battery without an electrolytic solution, the reaction efficiency is significantly reduced compared with a secondary battery (liquid-type battery) that extracts electricity between the positive electrode and the negative electrode via an electrolytic solution, and charging and discharging at low temperatures (room temperature or lower, 25°C or lower) become very difficult.

In other words, even when the materials and structures used in liquid-type batteries are simply substituted with those used in all-solid-state or semi-solid-state batteries, the same level of performance cannot be readily achieved. This is because in the case of solid-state batteries, the parts that contribute to the reaction do not contain electrolytic solution, and diffusion of lithium ions does not occur as easily as in liquid-type batteries. Also, in the case of conversion reactions using multistep reactions, the diffusion of the three types of ions such as lithium ions, chloride ions, and copper ions and the re-encounter between these ions must be repeated in order for the recharging after discharging to occur.

The inventors of this application have considered that one of the reasons why it is difficult to cause charge/discharge reactions to occur at room temperature in solid-state batteries is that it is difficult to transfer chloride ions in the positive electrode. Reaction formulas (1) and (2) of the chemical reactions that occur during charging and discharging in the positive electrode are shown below.

CuCl₂ + Li⁺ + e⁻ ←→ CuCl + LiCl (3.41V vs. Li⁺/Li) ... (1)

CuCl + Li⁺ + e⁻ ←→ Cu + LiCl (2.74V vs. Li⁺/Li) ... (2)

That is, during discharging, the reaction of CuCl₂ + Li⁺ + e⁻ → CuCl + LiCl in reaction formula (1) occurs, and then the reaction of CuCl + Li⁺ + e⁻ → Cu + LiCl in reaction formula (2) occurs. In this way, CuCl₂ is reduced to Cu by Li⁺. Also, the reverse reaction occurs during charging. That is, during charging, the reaction of Cu + LiCl → CuCl + Li⁺ + e⁻ in reaction formula (2) occurs, and then the reaction of CuCl + LiCl → CuCl₂ + Li⁺ + e⁻ in reaction formula (1) occurs. In this way, Cu is reduced to CuCl₂ by LiCl. The solid-state battery functions as a secondary battery due to this redox reaction.

In the solid-state battery of the comparative example, it is considered that a surface reaction in which a reaction occurs sequentially from the outermost surface of the positive electrode that is in contact with the solid electrolyte occurs, and the active material (reaction product) that has completed the reaction is concentrated near the outermost surface on the solid electrolyte side, whereby the movement of ions in the ion conduction path is hindered. The active material (reaction product) that has completed the reaction mentioned here is LiCl that is generated in reaction formula (1) (see the right side of reaction formula (1) in FIG. 1).

Therefore, the inventors of this application considered using LiCl (lithium chloride) as the additive constituting the positive electrode, unlike the secondary battery of the comparative example described above. Here, FIG. 2 illustrates compounding ratios of materials constituting the positive electrode of the secondary battery of the comparative example. FIG. 3 illustrates compounding ratios of materials constituting the positive electrode of the secondary battery of this embodiment. As illustrated in FIG. 2, acetylene black is blended as a conductive additive constituting the positive electrode in the comparative example, and lithium chloride is blended as an additive constituting the positive electrode in this embodiment. The compounding ratios of the respective materials (unit: weight percent) are as illustrated in FIG. 2 and FIG. 3.

The compounding ratio (weight ratio) of lithium chloride, which is the additive of this embodiment, in the positive electrode is preferably 2% or more and 30% or less. This is because the capacity of the secondary battery during charging and discharging that results from using lithium chloride as an additive cannot be sufficiently obtained when the compounding ratio of lithium chloride is less than 2%, and the compounding ratios of the active material and the electrolyte become small and the charge/discharge reactions are hindered when the compounding ratio thereof is more than 30%. Here, as an example, the compounding ratio of lithium chloride in the positive electrode is 12.54%. As long as the compounding ratio of lithium chloride in the positive electrode falls within the above numerical range, other materials (for example, acetylene black) may also be blended as conductive additives.

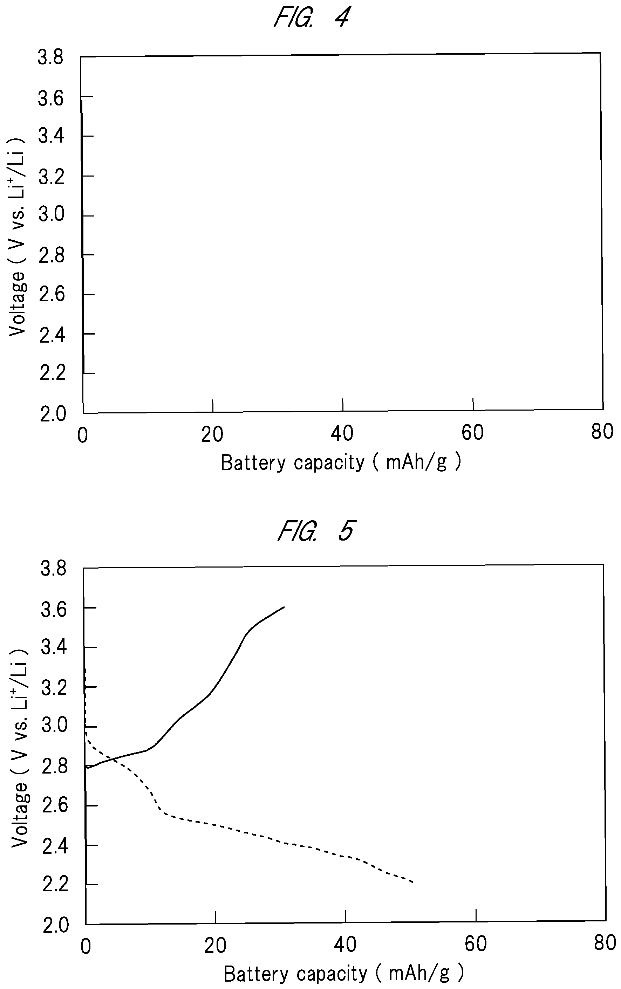

The inventors of this application conducted a charging/discharging test using the secondary battery of the comparative example provided with the positive electrode having the compounding ratio illustrated in FIG. 2, and obtained the characteristics illustrated in the graph in FIG. 4. In the graphs illustrated in FIG. 4 and FIG. 5 described later, the horizontal axis represents the capacity of the secondary battery, and the vertical axis represents the voltage of the secondary battery. In addition, in FIG. 4 and FIG. 5, the graphs during discharging are indicated by solid lines, and the graphs during charging are indicated by dashed lines. This charging/discharging was the charging/discharging in the first cycle performed under conditions in which the ambient temperature was room temperature, the cutoff voltage was set to 3.6 V or higher and 2.2 V or lower, and the charge-discharge rate was 0.05 C.

As illustrated in FIG. 4, in the secondary battery of the comparative example, the capacity is very small at all voltages. Although it is difficult to confirm in FIG. 4, the graph extends vertically between voltages of 2.2 and 3.6 V around the capacity of near 0 mAh/g. Note that, even in the secondary battery of the comparative example, a large capacity is exhibited under high temperature conditions. However, a battery that exhibits a very small capacity at room temperature is difficult to use as a secondary battery. In contrast, in the secondary battery of this embodiment, a large capacity can be obtained even under a room temperature environment, making it possible to use it as a secondary battery.

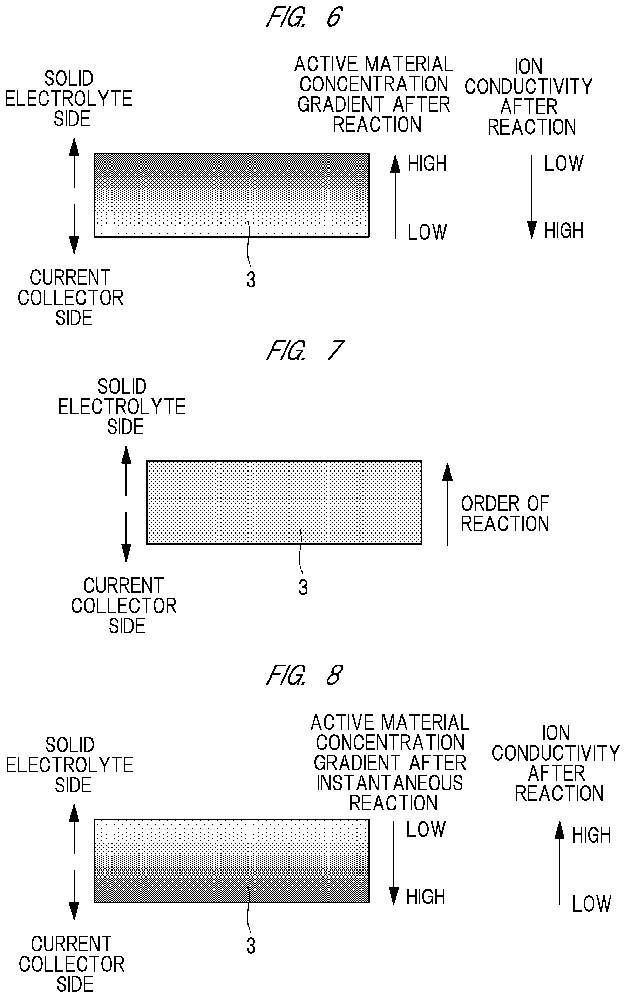

The inventors' considerations as to why there is a difference in performance of the secondary battery between the comparative example and this embodiment will be described below with reference to FIG. 6 to FIG. 8. In FIG. 6 to FIG. 8, schematic diagrams of the positive electrode of the secondary battery are illustrated, in which regions having a high concentration of LiCl (lithium chloride) are depicted in dark shading (high-density dots).

As illustrated in FIG. 6, in the positive electrode 3a of the secondary battery of the comparative example in which acetylene black is used as a conductive additive and lithium chloride as an additive is not added, a chemical reaction occurs sequentially from the surface on the side of the solid electrolyte 4 (see FIG. 1), and lithium chloride which is the active material (reaction product) that has completed the reaction is concentrated in high concentrations on the surface side. As a result, the ion conductivity on this surface side decreases, making it difficult to transfer chloride ions promptly.

In contrast, as illustrated in FIG. 7, the positive electrode 3 of this embodiment contains lithium chloride as an additive. Therefore, lithium chloride is distributed almost uniformly throughout the positive electrode 3. In other words, the difference between the compounding ratio of lithium chloride on the surface of the positive electrode 3 on the side of the solid electrolyte 4 and the compounding ratio of lithium chloride on the opposite surface is ±2% or less.

As a result, the positive electrode 3 is in a state where Cl⁻ ions are excessively added throughout the electrode. By creating a situation in which Cl⁻ ions excessively exist around the active material in this way, a chemical reaction occurs sequentially from the surface on the side of the current collector 1. In other words, MCl releases Cl⁻ ions like a catalyst (M is metal cation catalyst such as Li (lithium), Na (sodium), or K (potassium)), making it possible to rapidly charge and discharge from the side of the current collector 1.

As illustrated in FIG. 8, the concentration gradient of the active material (LiCl) after the instantaneous reaction gradually increases from the side of the solid electrolyte 4 toward the current collector 1 (see FIG. 1). In other words, after charging or discharging the secondary battery, the compounding ratio of lithium chloride on the surface of the positive electrode 3 of the secondary battery on the side of the solid electrolyte 4 is smaller than the compounding ratio of lithium chloride on the surface opposite to that surface.

Therefore, it is possible to prevent the active material from concentrating on the side of the solid electrolyte 4. In other words, since the concentration of the active material on the side of the solid electrolyte 4 is low in the positive electrode 3 after the reaction, the ion conductivity is high. Accordingly, chloride ions can be transferred promptly near the solid electrolyte 4. This makes it possible to charge and discharge at room temperature.

In the foregoing, the invention made by the inventors of this application has been specifically described based on the embodiment, but it is needless to say that the present invention is not limited to the embodiment described above and can be modified in various ways with the range not departing from the gist thereof.

For example, a semi-solid-state battery has been described as an example in the embodiment above, but the embodiment can be also applied to a positive electrode of an all-solid-state battery.

### REFERENCE SIGNS LIST

- 1: current collector
- 2: primer coat layer
- 3, 3a: positive electrode
- 4: solid electrolyte
- 5a, 5b: electrolytic solution
- 6: separator
- 7: negative electrode
- 8: current collector
- 10: secondary battery

## Claims

1. A secondary battery comprising:
a solid electrolyte; and
an electrode which is in contact with the solid electrolyte and used as a positive electrode,
wherein the electrode contains an electrolyte and an additive, and
wherein the additive contains a halide having a metal counter cation.

2. The secondary battery according to claim 1,
wherein a compounding ratio of the halide among materials constituting the electrode is 2% or more and 30% or less.

3. The secondary battery according to claim 1,
wherein the halide is lithium chloride, sodium chloride, or potassium chloride.

4. The secondary battery according to claim 1,
wherein the electrode further contains a binder.

5. The secondary battery according to claim 1,
wherein the electrode further contains carbon as a conductive additive.

6. The secondary battery according to claim 1, containing lithium chloride,
wherein a difference between a compounding ratio of the lithium chloride on a first surface of the electrode on a side of the solid electrolyte and a compounding ratio of the lithium chloride on a second surface of the secondary battery on an opposite side of the first surface is ±2% or less.

7. The secondary battery according to claim 1, containing lithium chloride,
wherein, after charging or discharging the secondary battery, a compounding ratio of the lithium chloride on a first surface of the electrode on a side of the solid electrolyte is smaller than a compounding ratio of the lithium chloride on a second surface of the secondary battery on an opposite side of the first surface.
